# EUROPÄISCHE PATENTSCHRIFT

(11) **EP 0 835 530 B1**
(45) Veröffentlichungstag und Bekanntmachung des Hinweises auf die Patenterteilung: **08.12.1999**
(21) Anmeldenummer: 96918609.7
(22) Anmeldetag: 25.06.1996
(51) Int. Cl.: H01M 8/04, H01M 8/02

(54) **HOCHTEMPERATUR-BRENNSTOFFZELLENANLAGE UND VERFAHREN ZU IHREM BETRIEB**
HIGH-TEMPERATURE FUEL CELL INSTALLATION AND PROCESS FOR ITS OPERATION
INSTALLATION DE CELLULES ELECTROCHIMIQUES A HAUTE TEMPERATURE ET PROCEDE PERMETTANT SON FONCTIONNEMENT

(30) Priorität: 30.06.1995 DE 19523973
(43) Veröffentlichungstag der Anmeldung: 15.04.1998
(73) Patentinhaber: SIEMENS AKTIENGESELLSCHAFT, 80333 München (DE)
(72) Erfinder: LEHMEIER, Jürgen, D-30171 Hannover (DE); REITER, Kurt, D-91058 Erlangen (DE); STIEF, Gerald, D-90469 Nürnberg (DE)
(86) Internationale Anmeldenummer: DE9601116
(87) Internationale Veröffentlichungsnummer: WO9702614

(56) Entgegenhaltungen:
- WO-A-95/18469
- DE-A- 1 496 128
- DE-A- 1 496 346
- DE-B- 1 119 352
- FR-A- 1 585 403
- US-A- 3 718 506
- PATENT ABSTRACTS OF JAPAN vol. 011, no. 249 (E-532), 13.August 1987 & JP,A,62 061276 (INOUE JAPAX RES INC), 17.März 1987,
- PATENT ABSTRACTS OF JAPAN vol. 009, no. 075 (E-306), 4.April 1985 & JP,A,59 209280 (MATSUSHITA DENKI SANGYO KK), 27.November 1984,
- PATENT ABSTRACTS OF JAPAN vol. 016, no. 146 (E-1188), 10.April 1992 & JP,A,04 004570 (HITACHI LTD), 9.Januar 1992,
- PATENT ABSTRACTS OF JAPAN vol. 011, no. 341 (E-554), 7.November 1987 & JP,A,62 122073 (HITACHI LTD), 3.Juni 1987,
- PATENT ABSTRACTS OF JAPAN vol. 012, no. 435 (E-683), 16.November 1988 & JP,A,63 168972 (HITACHI LTD), 12.Juli 1988,

## Beschreibung

Die Erfindung bezieht sich auf eine Hochtemperatur-Brennstoffzellenanlage und ein Verfahren zu ihrem Betrieb.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom: mit hohem Wirkungsgrad und - wenn als Brenngas reiner Wasserstoff eingesetzt wird - ohne Emission von Schadstoffen und Kohlendioxid. Auch mit technischen Brenngasen, beispielsweise Erdgas oder Kohlegas, und mit Luft oder mit mit O₂ angereicherter Luft anstelle von reinem Sauerstoff erzeugt eine Brennstoffzelle deutlich weniger Schadstoffe und weniger CO₂ als andere Energieerzeuger, die mit fossilen Energieträgern arbeiten. Die technische Umsetzung des Prinzips der Brennstoffzelle hat zu sehr unterschiedlichen Lösungen, und zwar mit verschiedenartigen Elektrolyten und mit Betriebstemperaturen T₀ zwischen 80 °C und 1000 °C, geführt. In Abhängigkeit von ihrer Betriebstemperatur T₀ werden die Brennstoffzellen in Nieder-, Mittel- und Hochtemperatur-Brennstoffzellen eingeteilt, die sich wiederum durch verschiedene technische Ausführungsformen unterscheiden.

Bei der Hochtemperatur-Brennstoffzelle (Solid Oxid Fuel Cell, SOFC) beispielsweise dient Erdgas als primäre Energiequelle. Der sehr kompakte Aufbau ermöglicht eine Leistungsdichte von 1 MW/m³. Es ergeben sich Betriebstemperaturen T₀ von über 900 °C.

Ein Brennstoffzellenblock, der in der Fachliteratur auch "Stack" genannt wird, setzt sich in der Regel aus einer Vielzahl von planar aufgebauten und aufeinander gestapelten Brennstoffzellen zusammen.

Um eine Brennstoffzellenanlage, die mindestens einen Brennstoffzellenblock umfaßt, mit einer hohen, konstanten Betriebstemperatur T₀ von beispielsweise über 900 °C zu betreiben, muß dieser zum Erreichen der Betriebstemperatur T₀ vor dem Betrieb bzw. zum Halten der notwendigen Betriebstemperatur T₀ während kurzer Betriebspausen Warme zugeführt werden. Die zur Zeit realisierten Brennstoffzellenblöcke haben relativ kleine Leistungen und weisen Abmessungen im Labormaßstab auf. Sie werden in einem Ofen auf die Betriebstemperatur T₀ von ca. 600 °C bei der MCFC (Molten Carbonate Fuel Cell) oder ca. 950 °C bei der SOFC gebracht und im Ofen betrieben. Diese Lösung ist für Brennstoffzellenblöcke mit größeren Leistungen und Abmessungen nicht praktikabel.

Aus "A Study for a 200 kWe-System for Power and Heat" von M. R. Taylor, D. S. Beishon, Tagungsbericht "First European Solid Oxid Fuel Cell Forum", Luzern 1994, Seiten 849 bis 864, ist ein Verfahren bekannt, das zwecks Erwärmen durch den Brennstoffzellenblock Rauchgas leitet. Dieses Verfahren ist unvorteilhaft, da durch das Rauchgas die Brennstoffzellen, aus denen sich der Brennstoffzellenblock zusammensetzt, verschmutzt oder beschädigt werden.

Aus der DE 42 23 291 Al ist eine Brennstoffzellen-Systemeinheit bekannt, die einen Zellenstapel umfaßt, der sich aus einer Vielzahl einzelner Brennstoffzellen zusammensetzt. Eine außerhalb der Brennstoffzellen-Systemeinheit angeordnete Vorrichtung zur Temperaturerhöhung erhitzt bei Betriebsbeginn die Brennstoffzellen-Systemeinheit durchlaufendes Wasser, wodurch die einzelnen Brennstoffzellen auf eine vorgegebene Temperatur vorgeheizt werden.

Aus der DE 40 37 970 Al ist ein Verfahren bekannt, bei dem mit einem heißen Abgas eines Brennstoffzellenstapels ein Betriebsmittel für den Brennstoffzellenstapel erwärmt wird. Ein solches Verfahren ist außerdem aus der EP 0 654 838 Al bekannt.

Der Erfindung liegt nun die Aufgabe zugrunde, eine Hochtemperatur-Brennstoffzellenanlage anzugeben, bei der die Hochtemperatur-Brennstoffzellen beim Erwärmen nicht verschmutzt oder beschädigt werden. Außerdem soll ein Verfahren zum Betreiben einer solchen Hochtemperatur-Brennstoffzellenanlage angegeben werden.

Die erstgenannte Aufgabe wird gelöst durch eine Hochtemperatur-Brennstoffzellenanlage mit mindestens einem Hochtemperatur-Brennstoffzellenblock, zu dessen Erwärmung mindestens ein elektrisches Heizelement vorgesehen ist, wobei das Heizelement außerhalb des Hochtemperatur-Brennstoffzellenblocks angeordnet ist, und wobei der Zwischenraum zwischen dem Heizelement und dem Hochtemperatur-Brennstoffzellenblock durch wärmeleitendes Material ausgefüllt ist.

Die zweitgenannte Aufgabe wird gelöst durch ein Verfahren zum Betreiben einer Hochtemperatur-Brennstoffzellenanlage mit mindestens einem Hochtemperatur-Brennstoffzellenblock, wobei der Hochtemperatur-Brennstoffzellenblock von außen mit mindestens einem elektrischen Heizelement über ein wärmeleitendes Material erwärmt wird.

Durch die Verwendung des elektrischen Heizelements kann eine gute Temperaturregelung gewährleistet werden. Das wärmeleitende Material zwischen dem Heizelement und dem Hochtemperatur-Brennstoffzellenblock sorgt für eine besonders günstige Wärmeübertragung zwischen dem elektrischen Heizelement und dem Hochtemperatur-Brennstoffzellenblock. Natürlich kann das Heizelement auch dicht auf der Außenwand des Brennstoffzellenblocks aufgebracht sein.

Vorzugsweise ist das elektrische Heizelement innerhalb eines Hochtemperatur-Brennstoffzellenbehälters mit thermischer Isolierung angeordnet. Dadurch wird nur wenig Wärme aus dem Hochtemperatur-Brennstoffzellenbehälter an die Umgebung abgegeben.

Bei dem Verfahren zum Betreiben der Hochtemperatur-Brennstoffzellenanlage nach Anspruch 3 wird der Hochtemperatur-Brennstoffzellenblock gemäß der Erfindung mit mindestens einem elektrischen Heizelement erwärmt. Durch das elektrische Heizelement wird der Hochtemperatur-Brennstoffzellenblock dabei unabhängig von der beim Reaktionsprozeß produzierten Wärme erwärmt. Zum Erwärmen wird also kein Rauchgas verwendet. Demzufolge kommt es nicht zu Verschmutzungen oder Beschädigungen der Hochtemperatur-Brennstoffzellen aufgrund von Rauchgaseinwirkungen. Der Hochtemperatur-Brennstoffzellenblock wird nicht in einem speziellen Ofen erwärmt, d. h. daß das Verfahren auf jede beliebige Konfiguration von Hochtemperatur-Brennstoffzellenblöcken anwendbar ist. Das Verfahren ist damit unabhängig von den Leistungen und den Abmessungen der Hochtemperatur-Brennstoffzellenblöcke und damit ebenso unabhängig von den Abmessungen der Hochtemperatur-Brennstoffzellenanlage.

Vorzugsweise wird der Hochtemperatur-Brennstoffzellenblock von einer Ausgangstemperatur auf die notwendige Betriebstemperatur T₀ erwärmt. Es wird kein Betriebsmittel, beispielsweise Wasserstoff H₂ oder Sauerstoff O₂, zum Erwärmen benötigt. Dadurch werden Kosten für Betriebsmittel während des Erwärmens des Hochtemperatur-Brennstoffzellenblocks eingespart.

Insbesondere wird der Hochtemperatur-Brennstoffzellenblock auf der notwendigen Betriebstemperatur T₀ gehalten. Hierzu kann ein elektrischer Regelkreis vorgesehen sein. Demzufolge werden Leistungsschwankungen aufgrund von Schwankungen der Betriebstemperatur T₀ ausgeglichen oder vermieden. Nach kürzeren Betriebspausen muß der Hochtemperatur-Brennstoffzellenblock nicht mehr erneut auf die notwendige Betriebstemperatur T₀ hochgefahren werden, wodurch Kosten für Betriebsmittel und auch Zeit eingespart werden.

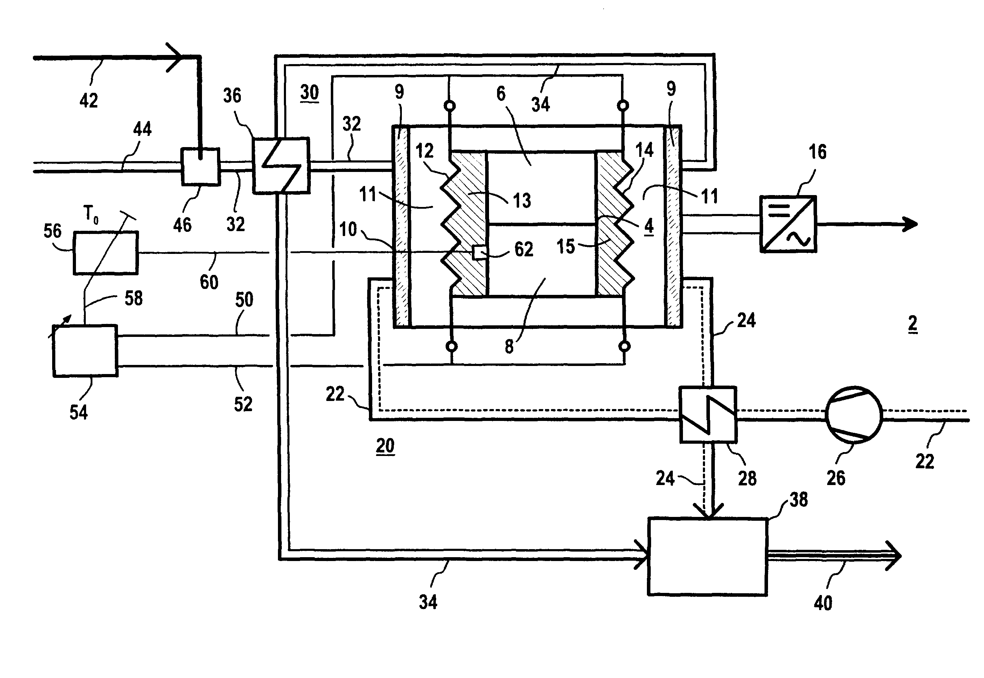

Zur weiteren Erläuterung der Erfindung wird auf das Ausführungsbeispiel der Zeichnung verwiesen, in deren einziger Figur eine Hochtemperatur-Brennstoffzellenanlage schematisch dargestellt ist.

Gemäß der Figur umfaßt eine Hochtemperatur-Brennstoffzellenanlage 2 einen Hochtemperatur-Brennstoffzellenblock 4, der in einen Anodenteil 6 mit nicht weiter dargestellten Anodengasräumen und einen Kathodenteil 8 mit nicht weiter dargestellten Kathodengasräumen aufgeteilt ist. Der Hochtemperatur-Brennstoffzellenblock 4 ist aus einer Vielzahl von planar aufgebauten, nicht weiter dargestellten Hochtemperatur-Brennstoffzellen zusammengesetzt, wie sie z.B. aus dem Deutschen Patent P 39 35 722.8 bekannt sind. Am Ausgang des Hochtemperatur-Brennstoffzellenblocks 4 ist ein Wechselrichter 16 angeschlossen, der den von dem Hochtemperatur-Brennstoffzellenblock 4 erzeugten Gleichstrom in Wechselstrom für ein hier nicht weiter dargestelltes Stromnetz umwandelt.

Der Hochtemperatur-Brennstoffzellenblock 4 ist in einem Hochtemperatur-Brennstoffzellenbehalter 10 mit thermischer Isolierung 9 auf den Innenwänden angeordnet. Außerdem sind jeweils im Innenraum 11 des Hochtemperatur-Brennstoffzellenbehälters 10 außerhalb des Hochtemperatur-Brennstoffzellenblocks 4 zwei elektrische Heizelemente 12, 14 angeordnet. Sie befinden sich an zwei gegenüberliegenden Wänden. Ansonsten ist der Zwischenraum zwischen dem Brennstoffzellenblock 4 und den und den Heizelementen 12, 14 mit wärmeleitendem Material 13, 15 ausgefüllt. Die Wärmeübertragung zwischen den elektrischen Heizelementen 12, 14 und dem Hochtemperatur-Brennstoffzellenblock 4 wird durch das wärmeleitende Material 13, 15 verbessert.

Die elektrischen Heizelemente 12, 14 stehen in thermischem Kontakt mit dem Hochtemperatur-Brennstoffzellenblock 4. Zum Erwärmen ist hier kein Rauchgas erforderlich. Demzufolge kommt es nicht zu Verschmutzungen oder Beschädigungen der Hochtemperatur-Brennstoffzellen aufgrund von Rauchgaseinwirkungen. Das Verfahren ist auf jede beliebige Konfiguration von Hochtemperatur-Brennstoffzellenblöcken anwendbar. Es ist damit unabhängig von den Leistungen und den Abmessungen der Brennstoffzellenblöcke und damit ebenso unabhängig von den Abmessungen der Brennstoffzellenanlage 2.

Durch dieses Verfahren wird der Hochtemperatur-Brennstoffzellenblock 4 auf seine Betriebstemperatur T₀ erwärmt oder während kurzer Betriebspausen auf dieser gehalten. Dazu wird die Temperatur T des Hochtemperatur-Brennstoffzellenblocks 4 geregelt. Die Temperatur T als Regelgröße wird dabei fortlaufend mit einem Temperatursensor 62 erfaßt, welcher dicht auf einer Außenwand des Hochtemperatur-Brennstoffzellenblocks 4 aufgebracht ist, und über eine elektrische Signalleitung 60 auf eine Regeleinheit 54 geschaltet. Die Betriebstemperatur To als Führungsgröße wird mit einem Sollwertgeber 56 über eine elektrische Signalleitung 58 der Regeleinheit 54 zur Verfügung gestellt. In der Regeleinheit 54 wird die Regelgröße T fortlaufend mit der Führungsgröße T₀ verglichen. Im Sinne einer Angleichung an die Führungsgröße T₀ werden die elektrischen Heizelemente 12, 14 über die elektrischen Leitungen 50, 52 entsprechend aufgeheizt.

Dem Kathodenteil 8 ist ein Kathodensystem 20 zugeordnet, das einen Zuweg 22 und einen Abweg 24 umfaßt. Das Prozeßgas für den Kathodenteil 8, beispielsweise Sauerstoff O₂, wird über den Zuweg 22 mit einem Verdichter 26 in den Hochtemperatur-Brennstoffzellenblock 4 eingespeist. Das Prozeßgas wird nach der Reaktion über den Abweg 24 abgeführt. Im Zuweg 22 ist ein erster Wärmetauscher 28 angeordnet, in dem das Prozeßabgas das zugeführte Prozeßgas für den Kathodenteil 8 erwärmt.

Nach Verlassen des ersten Wärmetauschers 28 wird das Prozeßabgas des Kathodenteils 8 über den Abweg 24 einer Einrichtung 38 zum Aufbereiten der Restgase zugeführt. Aus dieser Einrichtung 38 werden die aufbereiteten Gase über eine Abführungsleitung 40 zur Weiternutzung ausgeleitet.

Dem Anodenteil 6 ist ein Anodensystem 30 zugeordnet, das einen Zuweg 32 und einen Abweg 34 umfaßt. Das Prozeßgas für den Anodenteil 6, beispielsweise Wasserstoff H₂, wird über den Zuweg 32 zugeleitet. Im Zuweg 32 ist ein zweiter Wärmetauscher 36 angeordnet, in dem das aus dem Anodenteil 6 über den Abweg 34 abgeführte Prozeßabgas das dem Anodenteil 6 zugeführte Prozeßgas erwärmt. Der Abweg 34 mündet in die Einrichtung 38 zum Aufbereiten der Restgase.

Alternativ können über Zuführungsleitungen 42 und 44 und einen Mischer 46 Prozeßgase für den Betrieb der Hochtemperatur-Brennstoffzellenanlage 2, beispielsweise Brenngas und Reaktionsdampf, in den Zuweg 32 eingespeist werden.

## Patentansprüche

1. Hochtemperatur-Brennstoffzellenanlage (2) mit mindestens einem Hochtemperatur-Brennstoffzellenblock (4), zu dessen Erwärmung mindestens ein elektrisches Heizelement (12, 14) vorgesehen ist, wobei das Heizelement (12, 14) außerhalb des Hochtemperatur-Brennstoffzellenblocks (4) angeordnet ist und wobei der Zwischenraum zwischen dem Heizelement (12, 14) und dem Hochtemperatur-Brennstoffzellenblock (4) durch wärmeleitendes Material (13, 15) zur Verbesserung der Wärmeübertragung ausgefüllt ist.

2. Hochtemperatur-Brennstoffzellenanlage (2) nach Anspruch 1, bei dem das elektrische Heizelement (12, 14) innerhalb eines Hochtemperatur-Brennstoffzellenbehälters (10) mit thermischer Isolierung (9) angeordnet ist.

3. Verfahren zum Betreiben einer Hochtemperatur-Brennstoffzellenanlage (2) mit mindestens einem Hochtemperatur-Brennstoffzellenblock (4) nach Anspruch 1, wobei der Hochtemperatur-Brennstoffzellenblock (4) von außen mit mindestens einem elektrischen Heizelement (12, 14) über ein wärmeleitendes Material (13, 15) erwärmt wird.

4. Verfahren nach Anspruch 5, bei dem der Hochtemperatur-Brennstoffzellenblock (4) auf seine Betriebstemperatur T₀ erwärmt wird.

5. Verfahren nach Anspruch 3, bei dem der Hochtemperatur-Brennstoffzellenblock (4) auf seiner Betriebstemperatur T₀ gehalten wird.

## Claims

1. High temperature fuel cell system (2) having at least one high-temperature fuel cell block (4), for heating of which at least one electrical heating element (12, 14) is provided, the heating element (12, 14) being arranged outside the high-temperature fuel cell block (4) and the intermediate space between the heating element (12, 14) and the high-temperature fuel cell block (4) being filled by thermally conductive material (13, 15) to improve the heat transfer.

2. High temperature fuel cell system (2) according to Claim 1, in which the electrical heating element (12, 14) is arranged inside a high-temperature fuel cell container (10) having thermal insulation (9).

3. Method for operating a high-temperature fuel cell system (2) having at least one high-temperature fuel cell block (4) according to Claim 1, the high-temperature fuel cell block (4) being heated from the outside by at least one electrical heating element (12, 14) via a thermally conductive material (13, 15).

4. Method as claimed in Claim 3, in which the high-temperature fuel cell block (4) is heated to its operating temperature T₀.

5. Method as claimed in Claim 3, in which the high-temperature fuel cell block (4) is kept at its operating temperature T₀.

## Revendications

1. Installation (2) de piles à combustible à haute température, ayant au moins un bloc (4) de piles à combustible à haute température pour le réchauffement duquel il est prévu au moins un élément (12, 14) électrique de chauffage, l'élément (12, 14) de chauffage étant disposé à l'extérieur du bloc (4) de piles à combustible à haute température et l'intervalle compris entre l'élément (12, 14) de chauffage et le bloc (4) de piles à combustible à haute température étant empli de matière (13, 15) conductrice de chaleur pour améliorer le transfert de chaleur.

2. Installation (2) de piles à combustible à haute température selon la revendication 1, dans laquelle l'élément (12, 14) électrique de chauffage est disposé à l'intérieur d'une cuve (10) de piles à combustible à haute température ayant une isolation (9) thermique.

3. Procédé pour faire fonctionner un installation (2) de piles à combustible à haute température, ayant au moins un bloc (4) de piles à combustible à haute température selon la revendication 1, le bloc (4) de piles à combustible à haute température étant chauffé de l'extérieur par au moins un élément (12, 14) électrique de chauffage par l'intermédiaire d'une matière (13, 15) conductrice de la chaleur.

4. Procédé selon la revendication 5 dans lequel le bloc (4) de piles à combustible à haute température est chauffé à sa température T₀ de fonctionnement.

5. Procédé selon la revendication 3 dans lequel le bloc (4) de piles à combustible à haute température est maintenu à sa température T₀ de fonctionnement.
